# EUROPEAN PATENT SPECIFICATION

(11) **EP 3 023 961 B1**
(45) Date of publication and mention of the grant of the patent: **03.05.2017**
(21) Application number: 14193697.1
(22) Date of filing: 18.11.2014
(51) Int. Cl.: G08G 1/00, H04W 28/02, G08G 1/0967, H04W 4/04, H04L 29/08, H04L 12/24, H04L 12/851

(54) **METHODS AND DEVICES FOR CONTROLLING VEHICULAR WIRELESS COMMUNICATIONS**
VERFAHREN UND VORRICHTUNGEN ZUR STEUERUNG VON DRAHTLOSEN FAHRZEUGKOMMUNIKATIONEN
PROCÉDÉS ET DISPOSITIFS POUR COMMANDER DES COMMUNICATIONS SANS FIL D'UN VÉHICULE

(43) Date of publication of application: 25.05.2016
(73) Proprietor: FUJITSU LIMITED, Kawasaki-shi, Kanagawa 211-8588 (JP)
(72) Inventor: Fang, Yiwei, High Wycombe, Hertfordshire HP11 1GD (GB); Vadgama, Sunil Keshavji, Ashford, Middlesex TW15 3RD (GB)
(74) Representative: Schultes, Stephan

(56) References cited:
- US-A1- 2004 204 026
- US-A1- 2007 198 168

## Description

### Field of the Invention

Embodiments disclosed herein relate to methods and devices for controlling vehicular wireless communications.

### Background of the Invention

Intelligent Transportation Systems are advanced applications which aim to provide innovative services relating to different modes of transport and traffic management, and enable users to be better informed and make safer, more co-ordinated, and 'smarter' use of transport networks. An overview of Intelligent Transportation Systems can be found, for example, at the website http://www.etsi.org/index.php/technologies-clusters/technologies/intelligent-transport.

The amount of vehicular wireless communications between vehicles, and between vehicles and roadside stations, is expected to increase as Intelligent Transportation Systems become more prevalent and to meet ever-increasing voice, video and data requirements. These vehicular wireless communications typically occur at ground level, thereby increasing the general public's exposure to the associated electro-magnetic fields (EMF). Although no adverse effects of EMF exposure at the levels found in Intelligent Transportation Systems have been found, given public concerns over the issue it would be desirable to provide methods and devices for controlling vehicular wireless communications.

US2007/0198168 discloses a method of directing and/or alerting vehicles during an emergency or other event. The method may include providing messages and other information to the vehicles through wireless communications. The message may detail the emergency and/or an evacuation strategy for avoiding the emergency. Different vehicles may receive different messages and instructions depending on vehicle location and other parameters.

US2004/0204026 discloses one or more radio units of a wireless device used to measure or detect clues about the radio propagation environment and type of space that surrounds a wireless device. From the measurements, the wireless device may determine the type of location that it is located within, whether that is simply a determination between inside and outside or a more complex determination of the type of building or space that the wireless device is located within. In either case, this determination can be used to automatically change/adjust the radio system operation parameters the wireless device operates in accordance with. With the type of location determined, a wireless device may then automatically select the appropriate radio system operation parameters for the type of location that it is in and the corresponding regulations that apply.

### Summary

One aspect of the invention provides a method of controlling vehicular wireless communications of an on-board wireless communications unit of a vehicle, comprising: receiving information relating to the number of people and the number of vehicles with on-board wireless communications units in a geographical area; and setting a wireless communications policy defining which of a plurality of different types of data of vehicular wireless communications is permitted to be transmitted in the geographical area, based on the received information, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

Setting permissions for vehicular wireless communications based on the number of people and the number of vehicles with on-board wireless communications units in a geographical area allows exposure to EMF associated with such vehicular wireless communications to be controlled in that geographic area. Herein, the term "on-board wireless communications unit" refers to a device integrated to the vehicle and configured for vehicle-to-vehicle communications and/or vehicle-to-infrastructure communications.

The method may further comprise predicting a change in at least one of the number of people and the number of vehicles with on-board wireless communications units in the geographical area, based on the received information, and wherein the setting of the wireless communications policy is based on the predicted change. The setting of the wireless communications policy can therefore take into account not only current information (the number of people and/or the number of vehicles with on-board wireless communications units currently in the geographical area) but also forecasts (the number of people and/or the number of vehicles with on-board wireless communications units expected to be in the geographical area at some time in the future).

The method (or at least part of the method) may be performed by a central computing device, the central computing device generating a signal for transmission to vehicles with on-board wireless communications units to cause them to implement the wireless communications policy when in the geographic area. The central computing device may be part of an Intelligent Transportation System. Herein, the term "Intelligent Transportation System" means any electronics, communications, or information processing used singly or in combination to improve the efficiency and/or safety of a surface transportation system. The signal generated by the central computing device can be transmitted via roadside infrastructure. The signal may specify, either directly or indirectly, what vehicular wireless communications are permitted. Furthermore, the signal may specify the geographic area for which the wireless communications policy applies, thereby enabling vehicles to determine when to implement the wireless communications policy. Alternatively, the signal may include one or more instructions to implement the wireless communications policy upon receipt of the signal.

The provision of a central computing device allows central control over multiple geographic areas. The term "geographic area" means any area of a particular geographical location, such as a street, a neighbourhood, a city, or a greater area. Different geographic areas can have different sizes.

The wireless communications policy can define the type and/or the amount of vehicular wireless communications permitted to be transmitted in the geographical area. In particular, as noted above the wireless communications policy defines which of a plurality of different types of data is permitted to be transmitted in the geographic area, the plurality of different types of data being classified according to how long transmission can be delayed. This is based on the realization that one characteristic of vehicular wireless communications is that not all of the data transmitted by such vehicular wireless communications requires real-time transmission, which means that a portion of data to be transmitted can be stored by the on-board wireless communications unit for transmission at a later time.

In particular, as noted above the plurality of different types of data comprises a first type of data that is permitted to be transmitted in the geographic area at any time (i.e., the data can be considered as non-delay tolerant), a second type of data that is permitted to be transmitted in the geographic area only when there are no restrictions on vehicular wireless communications in the geographic area (i.e., the data can be considered as highly delay tolerant), and a third type of data of which at least a portion is permitted to be transmitted in the geographic area only after a predetermined time (delay threshold) has expired (i.e., the data can be considered as moderately delay tolerant). For implementing the wireless communications policy, the on-board wireless communications unit can determine the type of data that is to be transmitted.

The wireless communications policy may define which portion of the third type of data is permitted to be transmitted after the predetermined time has expired, the portion comprising at least one of: the oldest buffered data since the last transmission, and the most recent buffered data since the last transmission. Of course, other portions of data may be transmitted alternatively or in addition.

The plurality of different types of data may be organized into a plurality of communication restriction levels according to the type of data. For example, the highest restriction level can permit transmission only of the first type of data. Such restriction levels can be used to effectively control the amount of data that is transmitted within the geographic area, because, in general, non-delay tolerant data (i.e., data requiring real-time transmission) represents a small proportion of the total data of vehicular wireless communications.

The method may further comprise: monitoring a location of the vehicle; determining that the vehicle is in the geographic area, based on the monitored location; and controlling vehicular wireless communications of the on-board wireless communications unit in accordance with the wireless communications policy when it is determined that the vehicle is in the geographic area. These steps can variously be performed by one or a combination of the vehicle, roadside infrastructure, and central computing device.

The received information can be related to the number of people and the number of vehicles with on-board wireless communications units that were historically in the geographic area, that are actually in the geographic area, that are anticipated to be in the geographic area, or any combination thereof.

The received information may comprise real-time, or near real-time, tracking information. This allows the wireless communications policy to be set according to current conditions. Tracking information can indicate, for example, the number of people entering/exiting the geographic area and the number of vehicles entering/exiting the geographic area. Tracking information about vehicles can be obtained using infrastructure-based technologies, in-vehicle technologies, or a combination of both. Infrastructure-based technologies include, for example, roadside sensors such as, but not limited to, in-the-road loop detectors, roadside radar, microwave sensors, video sensors and infrared sensors. In-vehicle technologies include, for example, vehicle-based data collection systems such as, but not limited to, Global Positioning System (GPS) receivers, and cell-based technology (using location and movement data from mobile phones within vehicles). Although not all vehicles will necessarily be equipped with on-board wireless communications units, it can be assumed that a certain percentage of vehicles will be. Tracking information about people can be obtained using infrastructure-based technologies, user device-based technologies, or a combination of both. Infrastructure-based technologies include, for example, video cameras and communication network-based technologies (e.g., instance Cell-ID). User device technologies include, for example, handset-based technologies such as Global Positioning System (GPS) receivers.

The received information may comprise at least one of information indicating travel to or from the geographic area by at least one of people and vehicles at a past or future point in time. Such information can be, for example, historical/statistical population and/or vehicle density patterns, and information about planned events in the geographic area.

Another aspect of the invention provides a device for controlling vehicular wireless communications of an on-board wireless communications unit of a vehicle, comprising: a processor; and memory storing instructions which, when executed by the processor, cause the processor to: set a wireless communications policy defining which of a plurality of different types of data of vehicular wireless communications is permitted to be transmitted in a geographical area, based on received information relating to the number of people and the number of vehicles with on-board wireless communications devices in a geographical area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

The device may be a central computing device, for example of an Intelligent Transportation System.

Another aspect of the invention provides method of controlling vehicular wireless communications by an on-board unit of a vehicle, comprising: monitoring a location of the vehicle; determining that the vehicle is in the geographic area, based on the monitored location; and controlling vehicular wireless communications of the on-board wireless communications unit in accordance with a wireless communications policy defining which of a plurality of different types of data of vehicular wireless communications is permitted in the geographic area, when it is determined that the vehicle is in the geographic area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

Another aspect of the invention provides an on-board wireless communications unit for a vehicle, comprising: wireless communications circuitry; a processor; and memory storing instructions which, when executed by the processor, cause the processor to: monitor a location of the vehicle, determine that the vehicle is in the geographic area, based on the monitored location, and control wireless communications of the on-board wireless communications unit in accordance with a wireless communications policy defining which of a plurality of different types of data of vehicular wireless communications is permitted in the geographic area, when it is determined that the vehicle is in the geographic area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

The on-board unit can include a locating unit configured to determine the location of the vehicle, e.g., a GPS unit, or can be operatively connected to such a locating unit and receive location information.

Another aspect of the invention provides a vehicle equipped with the aforementioned on-board wireless communications unit.

Another aspect of the invention provides a computer readable medium carrying computer readable instructions which, when executed by a computer, causes the computer to perform one of the aforementioned methods.

Any combination of one or more computer readable medium(s) may be utilized. The computer readable medium may be a computer readable signal medium or a computer readable storage medium.

A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical data storage device, a magnetic data storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

Further embodiments, features, and advantages of the invention, as well as the structure and operation of the various embodiments of the invention are described in detail below with reference to accompanying drawings.

### Brief Description of the Drawings

Figure 1 schematically shows an Intelligent Transportation System in which embodiments of the invention may be implemented;
Figure 2 is a flow chart of a method of managing vehicular wireless communications according to embodiments;
Figure 3 schematically shows a block diagram of a wireless communications policy engine according to an embodiment;
Figure 4 is a block diagram of an on-board unit of a vehicle for managing vehicular wireless communications according to an embodiment; and
Figure 5 is a block diagram of a central computing device for managing vehicular wireless communications according to an embodiment.

### Detailed Description

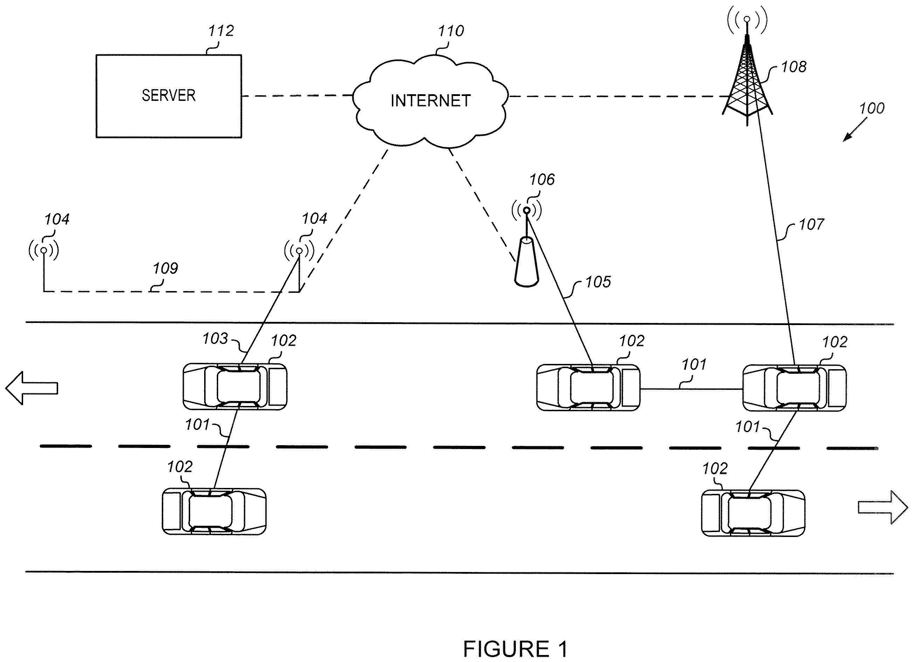

Figure 1 schematically shows an Intelligent Transportation System 100 in which embodiments may be implemented.

The Intelligent Transportation System 100 generally comprises three types of communication networks: (1) a wireless network formed among the vehicles 102 for Vehicle-to-Vehicle communication 101, (2) a wireless network that involves vehicle-to-infrastructure communication 103 between the vehicles 102 and road-side infrastructure 104, and (3) a predominantly wireline network 109 that connects the multiple infrastructure elements 104. Additional networks, such as a cellular network (represented by base station 108 and communication link 107, and which can be, for example, an eNodeB operating in accordance with the 3GPP LTE protocol) and public Wi-Fi (represented by access point 106 and communication link 105, and which can be, for example, a Wi-Fi router operating in accordance with the 802.11 a/b/g/n family of standards), can also be leveraged. It will be appreciated that the distinction between the various networks need not be so explicitly defined.

The entities within the Intelligent Transportation System 100 can generally be grouped into: (1) vehicles, (2) road-side infrastructure, and (3) central equipment. Here, the vehicles 102 comprise road vehicles including, for example, automobiles, vans, motorcycles, and trucks, buses, and trucks, as well as off-road vehicles such as all-terrain vehicles, agricultural vehicles and construction vehicles, equipped with on-board wireless communications units. Road-side infrastructure (also referred to as road-side equipment or road-side units) 104 are physical devices deployed along the road to perform local tasks related to the traffic. They can be, for example, traditional devices like traffic lights or variable message signs enhanced with computational and wireless communication capabilities, or dedicated devices such as relays that aim at increasing the connectivity between vehicles 102. The road-side infrastructure 104 may be managed by a central server 112, linked either directly or via another network, for example a wide area network such as the Internet 110. Central equipment 112 is intended to concentrate most of the ITS management and perform tasks like collecting traffic information, predicting congestions, initiating actions (possibly relayed on the road by some RSUs 104), coordinating traffic lights, and so on. The central equipment 112 can be, for example, one or more server computers which are usually considered as being reachable through the wide area network (Internet) 110 (or sometimes via some RSUs 104). In embodiments, the central equipment 112 is configured to set a wireless communications policy as will be described in more detail later. The Intelligent Transportation System 100 can also encompass personal devices attached to a vehicle 102 by users. This includes, for example, GPS-based navigation devices or in-car multimedia devices. Mobile phones may also be counted in this category if either they use the vehicle to access to a network or provide access to the vehicle. However, for purposes of setting the wireless communications policy as described herein they are not considered.

The types of vehicular wireless communications that vehicles make can generally be grouped into: (1) Vehicle-to-Vehicle (V2V) communications, and (2) Vehicle-to-Infrastructure (V21) communications. V2V communications include, for example, communications related to traffic safety. V21 communications include, for example, communications related to traffic management. Compared to wireless communication of mobile phones, which usually have an elevated wireless transmission path, the transmission and reception points of the V2V and V21 communications are usually at around ground level. This means that such communications can cause higher EMF human absorption.

Embodiments provide methods and devices to control vehicular wireless communications, for example from ITS vehicles in a smart city environment. Some embodiments employ a centralized computing device, which utilizes the information of the real time population density, vehicles density as well as other useful information from various areas of the city, to set a scheduling policy which limits what data transmissions can be made from vehicles in certain areas. In embodiments, the scheduling policy also sets priorities for different types of data traffic. As used here, the term "scheduling policy" (also referred to as a wireless communications policy) is a set of rules, procedures, and/or criteria used to determine what vehicular wireless communications are permitted.

To acquire the current traffic density, a number of traditional means can be used such as the use of the surveillance systems, the loading information of mobile base stations (e.g., processing power/telecommunication traffic, etc relative to the available capacity) along the main roads, and so on. The prediction of the density of traffic can be achieved by judging the historical traffic patterns, emergency redirect information, arrangements for public events and the aggregated destination information on the ITS navigation systems.

The acquisition of the real time population information and prediction of the future trend in the population increase or decrease in the an area can be aided by cloud based big data processing, which utilize real time position information of various parties, as well as people's interest, individual appointments, social media, public event, public interest and real-time disaster information to acquire and predict the population density. Thus, a wireless communication policy can be based on one or more of the following:
- Destination of traffic flowing information
- Information about crowds (people) gathering and movement in an area
- Address information of the area
- Number of vehicles in the area
- Measurement of other EMF sources in the area
- Number of people in the area
- Historical pattern and statistical information about the area

In one embodiment, a service of actively scheduling and managing vehicles EMF emissions is provided, in a smart city environment. The proposed service employs a policy engine, which collects various information on an area by area basis. Such local information can include but is not limited to population and vehicles density information, and then decides if a vehicle in an area should be imposed with any limitations regarding the amount of data it can transmit or a specific type of data that it can transmit. It is assumed that vehicles are equipped with wireless transmission facilities and they normally have a good amount of data to transmit.

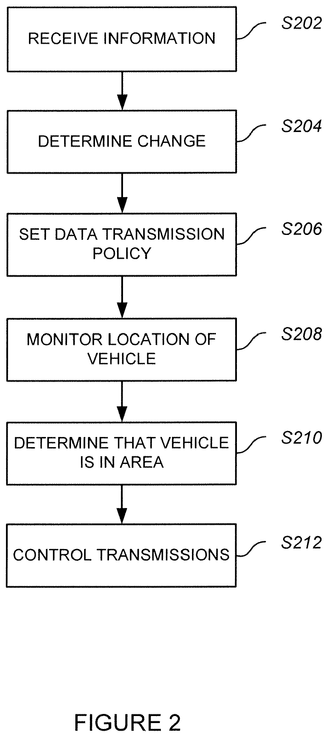

Figure 2 is a flow chart of a method of managing vehicular wireless communications according to embodiments. The method comprises the following steps.
- Step S202: Receiving information relating to the number of people and the number of vehicles with on-board wireless communications units in a geographical area.
- Step S204: Predicting a change in at least one of the number of people and the number of vehicles with on-board wireless communications units in the geographical area, based on the received information. This step optional.
- Step S206: Setting a wireless communications policy defining what vehicular wireless communications are permitted to be transmitted in the geographical area, based on the received information.
- Step S208: Monitoring a location of the vehicle.
- Step S210: Determining that the vehicle is in the geographic area, based on the monitored location.
- Step S212: Controlling vehicular wireless communications of the on-board wireless communications unit in accordance with the wireless communications policy when it is determined that the vehicle is in the geographic area.

The method steps can be performed by different entities. For example, in one embodiment, a central scheduling policy engine is for example hosted wirelessly in a "cloud computer network" and the scheduling policies generated by the engine are wirelessly transmitted to individual vehicles, via certain wireless communication techniques, such as the V21 communication or the V2V communication. In more detail, the central server can receive information (step S202), predict the change (step S204) and set the wireless communications policy (step S206). The central server can also monitor the location of the vehicle (step S208), based on information received from roadside units such as a roadside camera. By knowing the location of the roadside unit, the central server can determine that the vehicle is in (or is approaching) the geographic area to which the wireless communications policy applies (step S210). The central server can then transmit a signal to the vehicle via a roadside unit to control the vehicular wireless communications of the vehicle (step S212). Alternatively, roadside units can be configured to monitor (detect) the location of the vehicle (step S208) and determine that the vehicle is in (or is approaching) the geographic area to which the data transmission policy applies (step S210). The roadside units can then transmit a signal to the vehicle to control the vehicular wireless communications of the vehicle (step S212). Alternatively, the roadside unit can report the detection and determination back to the central server, which can then transmit a signal to the vehicle via a roadside unit to control the vehicular wireless communications of the vehicle (step S212).

In another example, all of the method steps can be performed by an on-board wireless communication unit of a vehicle. The on-board wireless communication unit can receive information about a geographic area (step S202) (either from different sources or collated), predict a change (step S204) and set the wireless communications policy (step S206). The on-board wireless communications unit can then monitor the location of the vehicle (step S208), which can be from information of a locating unit such as a GPS unit, and determine that the vehicle is in a geographic area associated with the data transmission policy (step S210). The on-board unit can then control vehicular wireless communications (step S212).

In yet another example, the method steps can be performed by a combination of the infrastructure and the on-board unit of a vehicle. For example, the infrastructure can perform steps S202, S204 and S206 and transmit the data transmission policy to the vehicle. The on-board wireless communications unit of the vehicle can perform steps S208, S210 and S212.

It is contemplated that any combination of the aforementioned may be implemented.

In the foregoing embodiments, the wireless communications policy is set based on information about the number of vehicles and people in the geographic area. In another embodiment, additional information is collected to allow for EMF emission scheduling decisions, can be detailed as but not limited to: 1) the current population density information in an area; 2) the elevation of the population (if they are on ground level or in high-rise buildings); 3) the amount of people coming to the area according to either public information on public events happening in the area or nearby, or aggregated information from social networks on people's travel arrangement into the area; 4) The number of vehicles currently in the area; 5) The number of vehicles coming to an area, e.g. judged by their navigation system settings; 6) Historical population and vehicles density patterns to assist the judgement. The scheduling decisions can be made once the scheduler is equipped with all the helpful information and an individual scheduling decision will be made for each area/street.

In embodiments, vehicular wireless communications can be classified according to the types of data to be transmitted. In particular, the data can classified according to how long transmission can be delayed. An exemplary classification scheme is set out below.

| **Data Type** | **Policy / Action List** |
|---|---|
| Most urgent and non-delay tolerant data. | Transmit regardless of number of people or vehicles in the area. |
| Can wait but within a specific time, high information integrity requirement. | Set up short observation period (timer), and only transmit data either when the vehicle has gone out of the restricted area or when the observation period expires. |
| Can wait for a long period, low information integrity requirement. | Longer observation period (time), vehicles can start transmission if the vehicle is out of a restricted area. If the observation period expires, only a specific amount of this type of buffered data is allowed for transmission. |
| Only needs to be transmitted whenever the network is free, highly delay tolerant. | Only transmit when there are no restrictions on radio transmissions in the area where the vehicle is in. |

Thus, embodiments use the particular characteristic of data of vehicular wireless communications often being delay tolerant, and design a scheduling policy engine service to manage the EMF emission and therefore the EMF exposure to the public.

A first type of data is data that is transmit regardless of number of people or vehicles in the area. Examples of such data include urgent data such as safety data. Safety data can identify risks and provide drivers with warnings to avoid other vehicles, including, for example, speed and position data of vehicles, vehicle parameter data, speed restrictions, traffic information, accident information, road conditions, and so on.

A second type of data is data that can wait but within a specific time, and has high information integrity requirement. When such data is to be transmitted, a short observation period (timer) is set up, and data is only transmitted either when the vehicle has gone out of the restricted area or when the observation period expires.

A third type of data is data that can wait for a long period, and has low information integrity requirement. When such data is to be transmitted, a longer observation period (time), vehicles can start transmission if the vehicle is out of a restricted area. If the observation period expires, only a specific amount of this type of buffered data is allowed for transmission. In this case, the wireless communications policy can which portion of the third type of data is permitted to be transmitted after the predetermined time has expired, for example the oldest buffered data since the last transmission, the latest data before the transmission restarts.

A fourth type of data is data that only needs to be transmitted whenever the network is free. This type of data is only transmitted when there are no restrictions on radio transmissions in the area where the vehicle is in.

Different restriction levels can be set for the different types of data. For example, vehicular wireless communications can be restricted to the first type of data when there are lots of people and vehicles in the geographic area. Alternatively, there may be no restrictions in place when there are few people and vehicles in the geographic area.

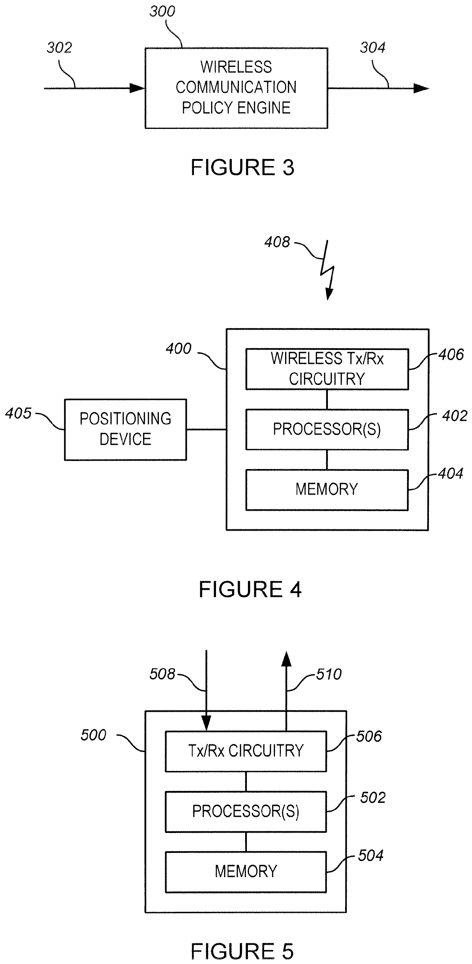

Figure 3 schematically shows a block diagram of a wireless communications policy engine 300 according to an embodiment. The wireless communications policy engine can be implemented in software, hardware or a combination of both. The wireless communications policy engine 300 receives information 302 as input and outputs a signal 304 indicating the wireless communications policy.

Figure 4 is a block diagram of an on-board unit 400 of a vehicle for managing vehicular wireless communications according to an embodiment. The on-board unit 400 includes a processor 402, memory 404 and wireless communications circuitry 406. For example, to support V2V and V21 communications, the wireless communications circuitry 406 can be configured to support, for example, the DSRC standard and optionally also WiFi. The processor 402 is configured to control the on-board unit. This unit can also be connected to a locating device (e.g., GPS receiver) 405, and a variety of in-car sensors to acquired detailed state of the car, and to input/output devices to interact with the driver (or passenger). The locating device 405 can also be integrated into the on-board unit 400.

Figure 5 is a block diagram of a central computing device for managing vehicular wireless communications according to an embodiment. The central computing device 500 includes a processor 502, memory 504, and communications circuitry 506. Processor 502 can comprise one or more central processing units (CPUs), graphics processing units (GPUs), accelerated processing units (APUs), or various combinations thereof. Processor 502 provides processing and control functions for the computing device 500. Memory 504 comprises one or more transient and static memory units configured to store instructions and data for the computing device 500. Communications circuitry 506 can comprise circuitry for wired communications and/or circuitry for wireless communications including at least one antenna such as a multiple-input and multiple-output (MIMO) antenna to support MIMO communications. The memory 504 can hold instructions comprise one or more sets of instructions or software executed by processor 502 to perform any of the methods discussed herein. The instructions may reside, completely or at least partially, within processor 502 and/or memory 504 during execution thereof by the computing device 500. In Figure 5, processing and control functionalities are illustrated as being provided by processor 502 along with associated instructions. However, these are only examples of processing circuitry that comprise programmable logic or circuitry (e.g., as encompassed within a general- purpose processor or other programmable processor) that is temporarily configured by software or firmware to perform certain operations. In various embodiments, processing circuitry may comprise dedicated circuitry or logic that is permanently configured (e.g., within a special-purpose processor, application specific integrated circuit (ASIC), or array) to perform certain operations. It will be appreciated that a decision to implement a processing circuitry mechanically, in dedicated and permanently configured circuitry, or in temporarily configured circuitry (e.g., configured by software) may be driven by, for example, cost, time, energy-usage, package size, or other considerations. Accordingly, the term "processing circuitry" should be understood to encompass a tangible entity, be that an entity that is physically constructed, permanently configured (e.g., hardwired), or temporarily configured (e.g., programmed) to operate in a certain manner or to perform certain operations described herein.

In summary then, embodiments provide a scheduling policy engine service aimed to reduce general public's exposure to EMF from radio intensive intelligent transport vehicles in a smart city environment. The scheduling policy engine for the proposed service is typically hosted in a cloud network with the scheduling decision wirelessly transmitted to vehicles. The scheduling engine utilizes various information for a given area, such as real-time population density, number of vehicles already in the area and number of vehicles coming into the area, as well as information from public events agenda and individual's travel arrangements from the social media, in order to predict number of people going towards the area. Consequently, the service will make scheduling decisions for each individual vehicle's wireless data transmissions, and thus regulate the overall EMF emission in the area.

Embodiments have been described with reference to flowchart illustrations and/or block diagrams of methods, apparatus (systems) and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

While the invention has been described with reference to exemplary embodiments, it will be apparent to those skilled in the art that various modifications and variations can be made without departing from the scope of the present invention as defined by the appended claims. For instance, features illustrated or described as part of one embodiment can be used with another embodiment to yield a still further embodiment.

Thus, it is intended that the present invention include such modifications and variations as come within the scope of the appended claims.

## Claims

1. A method of controlling vehicular wireless communications of an on-board wireless communications unit (400) of a vehicle (102), comprising:
receiving (S202) information relating to the number of people and the number of vehicles with on-board wireless communications units in a geographical area; and
setting (S206) a wireless communications policy defining which of a plurality of different types of data of vehicular wireless communications is permitted to be transmitted in the geographical area, based on the received information, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

2. The method according to claim 1, further comprising:
predicting (S204) a change in at least one of the number of people and the number of vehicles with on-board wireless communications units in the geographical area, based on the received information, and
wherein the setting of the wireless communications policy is based on the predicted change.

3. The method according to claim 1 or 2, wherein the method is performed by a central computing device (112; 500), the central computing device (112; 500) generating a signal for transmission to vehicles with on-board wireless communications units to cause them to implement the wireless communications policy when in the geographic area.

4. The method according to claim 1, wherein the wireless communications policy defines which portion of the third type of data is permitted to be transmitted after the predetermined time has expired, the portion comprising at least one of: the oldest buffered data since the last transmission, and the most recent buffered data since the last transmission.

5. The method according to claim 1 or 4, wherein the plurality of different types of data is organized into a plurality of communication restriction levels according to the type of data.

6. The method according to any one of the preceding claims, further comprising:
monitoring (S208) a location of the vehicle (102);
determining (S210) that the vehicle (102) is in the geographic area, based on the monitored location; and
controlling (S212) vehicular wireless communications of the on-board wireless communications unit (400) in accordance with the wireless communications policy when it is determined that the vehicle (102) is in the geographic area.

7. The method according to any one of the preceding claims, wherein the received information comprises real-time, or near real-time, tracking information.

8. The method according to any one of the preceding claims, wherein the received information comprises at least one of information indicating travel to or from the geographic area by at least one of people and vehicles with on-board wireless communications units at a past or future point in time.

9. A device (500) for controlling vehicular wireless communications of an on-board wireless communications unit (400) of a vehicle (102), comprising:
a processor (502); and
memory (504) storing instructions which, when executed by the processor (502), are adapted to: set a wireless communications policy defining which of a plurality of different types of data of vehicular wireless communications is permitted to be transmitted in a geographical area, based on received information relating to the number of people and the number of vehicles with on-board wireless communications units in a geographical area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

10. The device (500) according to claim 9, wherein the device (500) is a central computing device.

11. A method of controlling vehicular wireless communications by an on-board unit (400) of a vehicle (102), comprising:
monitoring (S208) a location of the vehicle (102);
determining (S210) that the vehicle (102) is in the geographic area, based on the monitored location; and
controlling (S212) vehicular wireless communications of the on-board wireless communications unit (400) in accordance with a wireless communications policy defining which of a plurality of different types of data of vehicular wireless communications is permitted in the geographic area, when it is determined that the vehicle is in the geographic area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

12. An on-board wireless communications unit (400) for a vehicle (102), comprising:
wireless communications circuitry (406);
a processor (402); and
memory (404) storing instructions which, when executed by the processor (402), are adapted to: monitor a location of the vehicle (102), determine that the vehicle (102) is in the geographic area, based on the monitored location, and control wireless communications of the on-board wireless communications unit (400) in accordance with a wireless communications policy defining which of a plurality of different types of data of vehicular wireless communications is permitted in the geographic area, when it is determined that the vehicle is in the geographic area, wherein the plurality of different types of data is classified according to how long transmission can be delayed and comprises a first type of data that is permitted to be transmitted in the geographic area at any time, a second type of data that is permitted to be transmitted in the geographic area only when there are no restrictions on vehicular wireless communications in the geographic area, and a third type of data of which at least a portion is permitted to be transmitted in the geographic area only after a predetermined time has expired.

13. A vehicle (102) having the on-board wireless communications unit (400) of claim 12.

## Patentansprüche

1. Verfahren zum Steuern einer drahtlosen Fahrzeugkommunikation einer bordeigenen Drahtloskommunikationseinheit (400) eines Fahrzeugs (102), das Folgendes umfasst:
Empfangen (S202) von Informationen bezüglich der Anzahl von Personen und der Anzahl von Fahrzeugen mit bordeigenen Drahtloskommunikationseinheiten in einem geografischen Gebiet; und
Einstellen (S206), auf der Basis der empfangenen Informationen, einer Drahtloskommunikationsvorschrift, die definiert, welche von mehreren verschiedenen Arten von Daten einer drahtlosen Fahrzeugkommunikation in dem geografischen Gebiet gesendet werden darf, wobei die mehreren verschiedenen Arten von Daten danach klassifiziert werden, wie lange die Übertragung verzögert werden kann, und eine erste Art von Daten umfassen, die zu jedem einzelnen Zeitpunkt in dem geografischen Gebiet gesendet werden dürfen, eine zweite Art von Daten umfassen, die in dem geografischen Gebiet nur dann gesendet werden dürfen, wenn es keine Beschränkungen hinsichtlich einer drahtlosen Fahrzeugkommunikation in dem geografischen Gebiet gibt, und eine dritte Art von Daten umfassen, von denen mindestens ein Teil in dem geografischen Gebiet erst gesendet werden darf, nachdem eine zuvor festgelegte Zeit verstrichen ist.

2. Verfahren nach Anspruch 1, das des Weiteren Folgendes umfasst:
Vorhersagen (S204) einer Änderung der Anzahl von Personen und/oder der Anzahl von Fahrzeugen mit bordeigenen Drahtloskommunikationseinheiten in dem geografischen Gebiet auf der Basis der empfangenen Informationen, und
wobei das Einstellen der Drahtloskommunikationsvorschrift auf der vorhergesagten Änderung basiert.

3. Verfahren nach Anspruch 1 oder 2, wobei das Verfahren durch eine zentrale Computervorrichtung (112; 500) ausgeführt wird, wobei die zentrale Computervorrichtung (112; 500) ein Signal für eine Übertragung an Fahrzeuge mit bordeigenen Drahtloskommunikationseinheiten generiert, um sie zu veranlassen, die Drahtloskommunikationsvorschrift zu implementieren, wenn sie sich in dem geografischen Gebiet befindet.

4. Verfahren nach Anspruch 1, wobei die Drahtloskommunikationsvorschrift definiert, welcher Teil der dritten Art von Daten gesendet werden darf, nachdem die zuvor festgelegte Zeit verstrichen ist, wobei der Teil die ältesten gepufferten Daten seit der letzten Übertragung und/oder die jüngsten gepufferten Daten seit der letzten Übertragung umfasst.

5. Verfahren nach Anspruch 1 oder 4, wobei die mehreren verschiedenen Arten von Daten zu mehreren Kommunikationsbeschränkungsstufen gemäß der Art von Daten organisiert werden.

6. Verfahren nach einem der vorangehenden Ansprüche, das des Weiteren Folgendes umfasst:
Überwachen (S208) eines Standortes des Fahrzeugs (102);
Bestimmen (S210), auf der Basis des überwachten Standortes, dass sich das Fahrzeug (102) in dem geografischen Gebiet befindet; und
Steuern (S212) einer drahtlosen Fahrzeugkommunikation der bordeigenen Drahtloskommunikationseinheit (400) gemäß der Drahtloskommunikationsvorschrift, wenn bestimmt wird, dass sich das Fahrzeug (102) in dem geografischen Gebiet befindet.

7. Verfahren nach einem der vorangehenden Ansprüche, wobei die empfangenen Informationen Echtzeit-, oder Nahe-Echtzeit-, Verfolgungsinformationen umfassen.

8. Verfahren nach einem der vorangehenden Ansprüche, wobei die empfangenen Informationen Informationen umfassen, die eine Fahrt von Personen und/oder Fahrzeugen mit bordeigenen Drahtloskommunikationseinheiten zu einem früheren oder einem zukünftigen Zeitpunkt in das geografische Gebiet und/oder aus dem geografischen Gebiet anzeigen.

9. Vorrichtung (500) zum Steuern einer drahtlosen Fahrzeugkommunikation einer bordeigenen Drahtloskommunikationseinheit (400) eines Fahrzeugs (102), die Folgendes umfasst:
einen Prozessor (502); und
Speicher (504), der Instruktionen speichert, die, wenn sie durch den Prozessor (502) ausgeführt werden, für Folgendes geeignet sind: Einstellen, auf der Basis empfangener Informationen bezüglich der Anzahl von Personen und der Anzahl von Fahrzeugen mit bordeigenen Drahtloskommunikationseinheiten in einem geografischen Gebiet, einer Drahtloskommunikationsvorschrift, die definiert, welche von mehreren verschiedenen Arten von Daten einer drahtlosen Fahrzeugkommunikation in einem geografischen Gebiet gesendet werden darf, wobei die mehreren verschiedenen Arten von Daten danach klassifiziert werden, wie lange die Übertragung verzögert werden kann, und eine erste Art von Daten umfassen, die zu jedem einzelnen Zeitpunkt in dem geografischen Gebiet gesendet werden dürfen, eine zweite Art von Daten umfassen, die in dem geografischen Gebiet nur dann gesendet werden dürfen, wenn es keine Beschränkungen hinsichtlich einer drahtlosen Fahrzeugkommunikation in dem geografischen Gebiet gibt, und eine dritte Art von Daten umfassen, von denen mindestens ein Teil in dem geografischen Gebiet erst gesendet werden darf, nachdem eine zuvor festgelegte Zeit verstrichen ist.

10. Vorrichtung (500) nach Anspruch 9, wobei die Vorrichtung (500) eine zentrale Computervorrichtung ist.

11. Verfahren zum Steuern einer drahtlosen Fahrzeugkommunikation durch eine bordeigene Einheit (400) eines Fahrzeugs (102), das Folgendes umfasst:
Überwachen (S208) eines Standortes des Fahrzeugs (102);
Bestimmen (S210), auf der Basis des überwachten Standortes, dass sich das Fahrzeug (102) in dem geografischen Gebiet befindet; und
Steuern (S212) einer drahtlosen Fahrzeugkommunikation der bordeigenen Drahtloskommunikationseinheit (400) gemäß der Drahtloskommunikationsvorschrift, die definiert, welche von mehreren verschiedenen Arten von Daten einer drahtlosen Fahrzeugkommunikation in die geografischen Gebiet zulässig ist, wenn bestimmt wird, dass sich das Fahrzeug in dem geografischen Gebiet befindet, wobei die mehreren verschiedenen Arten von Daten danach klassifiziert werden, wie lange die Übertragung verzögert werden kann, und eine erste Art von Daten umfassen, die zu jedem einzelnen Zeitpunkt in dem geografischen Gebiet gesendet werden dürfen, eine zweite Art von Daten umfassen, die in dem geografischen Gebiet nur dann gesendet werden dürfen, wenn es keine Beschränkungen hinsichtlich einer drahtlosen Fahrzeugkommunikation in dem geografischen Gebiet gibt, und eine dritte Art von Daten umfassen, von denen mindestens ein Teil in dem geografischen Gebiet erst gesendet werden darf, nachdem eine zuvor festgelegte Zeit verstrichen ist.

12. Bordeigene Drahtloskommunikationseinheit (400) für ein Fahrzeug (102), die Folgendes umfasst:
eine Drahtloskommunikationsschaltung (406);
einen Prozessor (402); und
Speicher (404), der Instruktionen speichert, die, wenn sie durch den Prozessor (402) ausgeführt werden, für Folgendes geeignet sind: Überwachen eines Standortes des Fahrzeugs (102), Bestimmen, auf der Basis des überwachten Standortes, dass sich das Fahrzeug (102) in dem geografischen Gebiet befindet, und Steuern einer Drahtloskommunikation der bordeigenen Drahtloskommunikationseinheit (400) gemäß einer Drahtloskommunikationsvorschrift, die definiert, welche von mehreren verschiedenen Arten von Daten einer drahtlosen Fahrzeugkommunikation in dem geografischen Gebiet zulässig ist, wenn bestimmt wird, dass sich das Fahrzeug in dem geografischen Gebiet befindet, wobei die mehreren verschiedenen Arten von Daten danach klassifiziert werden, wie lange die Übertragung verzögert werden kann, und eine erste Art von Daten umfassen, die zu jedem einzelnen Zeitpunkt in dem geografischen Gebiet gesendet werden dürfen, eine zweite Art von Daten umfassen, die in dem geografischen Gebiet nur dann gesendet werden dürfen, wenn es keine Beschränkungen hinsichtlich einer drahtlosen Fahrzeugkommunikation in dem geografischen Gebiet gibt, und eine dritte Art von Daten umfassen, von denen mindestens ein Teil in dem geografischen Gebiet erst gesendet werden darf, nachdem eine zuvor festgelegte Zeit verstrichen ist.

13. Fahrzeug (102), das die bordeigene Drahtloskommunikationseinheit (400) von Anspruch 12 aufweist.

## Revendications

1. Une méthode de commande de communications sans fil véhiculaires d'une unité de communications sans fil embarquées (400) d'un véhicule (102), comprenant :
la réception (S202) d'informations relatives au nombre de personnes et de véhicules avec des unités de communications sans fil embarquées dans une zone géographique; et
la détermination (S206) d'une politique de communications sans fil définissant laquelle d'une pluralité de types différents de données de communications sans fil véhiculaires est autorisée à être transmise dans la zone géographique, selon la durée au cours de laquelle une transmission ionique peut être retardée, et comprend un premier type de données autorisées à être transmises dans la zone géographique à tout moment, un second type de données qui ne sont autorisées à être transmises dans la zone géographique qu'une fois qu'il n'y a pas de restrictions au regard des communications sans fil véhiculaires dans la zone géographique, et un troisième type de données dont au moins une partie ne peut être transmise dans la zone géographique qu'après expiration d'un délai prédéterminé.

2. La méthode selon la revendication 1, comprenant davantage :
prévision (S204) d'un changement dans au moins l'un du nombre de personnes et de véhicules dotés d'unités de communications sans fil embarquées dans la zone géographique, sur la base des informations reçues, et
dans lequel le réglage de la politique de communications sans fil est fondé sur le changement prévu.

3. La méthode selon la revendication 1 ou 2, dans laquelle la méthode est réalisée par un dispositif de calcul central (112; 500), le dispositif de calcul central (112; 500) générant un signal pour la transmission à des véhicules dotés d'unités de communications sans fil embarquées afin de les conduire à la mise en oeuvre de la politique de communications sans fil une fois qu'ils sont dans la zone géographique.

4. La méthode selon la revendication 1, dans laquelle la politique de communications sans fil définit quelle partie du troisième type de données est autorisée à être transmise après l'expiration du délai prédéterminé, la partie comprenant au moins l'une de : les plus anciennes données tampon depuis la dernière transmission, et les données tampon les plus récentes depuis la dernière transmission.

5. La méthode selon les revendications 1 ou 4, dans laquelle la pluralité de différents types de données est organisée en une pluralité de niveaux de restriction de communication selon le type de données.

6. La méthode selon l'une quelconque des revendications précédentes, comprenant davantage :
la surveillance (S208) d'un emplacement du véhicule (102);
la détermination (S210) du fait que le véhicule (102) se trouve dans la zone géographique, au regard de l'emplacement surveillé; et
la commande (S212) des communications sans fil véhiculaires de l'unité de communications sans fil embarquées (400) selon la politique de communications sans fil une fois qu'il s'avère que le véhicule (102) se trouve dans la zone géographique.

7. La méthode selon l'une quelconque des revendications précédentes, dans laquelle l'information comprend un suivi d'information en temps réel ou presque en temps réel.

8. La méthode selon l'une quelconque des revendications précédentes, dans laquelle l'information reçue comprend au moins une des informations indiquant le déplacement vers ou à partir de la zone géographique par au moins une des personnes et des véhicules équipés d'unités de communications sans fil embarquées à un moment donné du temps passé ou futur.

9. Un dispositif (500) pour commander des communications sans fil véhiculaires d'une unité de communications sans fil embarquées (400) d'un véhicule (102), comprenant :
un processeur (502); et
une mémoire (504) stockant des instructions qui, une fois exécutées par le processeur (502), sont adaptées à: élaborer une politique de communications sans fil définissant laquelle d'une pluralité de types différents de données de communications sans fil véhiculaires est autorisée à être transmise dans une zone géographique, sur la base d'informations reçues relatives au nombre de personnes et de véhicules dotés d'unités de communications sans fil embarquées dans une zone géographique, dans laquelle la pluralité de différents types de données est classée en fonction de la durée au cours de laquelle une transmission peut être retardée, et comprend un premier type de données autorisées à être transmises dans la zone géographique à tout moment, un second type de données qui ne peuvent être transmises dans la zone géographique qu'une fois qu'il n'y a pas de restrictions sur les communications sans fil véhiculaires dans la zone géographique, et un troisième type de données dont au moins une partie ne peut être transmise dans la zone géographique qu'après expiration d'un temps prédéterminé.

10. Le dispositif (500) selon la revendication 9, dans lequel le dispositif (500) est un dispositif informatique central.

11. Une méthode de commande de communications sans fil véhiculaires par une unité embarquée (400) d'un véhicule (102), comprenant :
la surveillance (S208) d'un emplacement du véhicule (102);
la détermination (S210) du fait que le véhicule (102) se trouve dans la zone géographique, au regard de l'emplacement surveillé; et
la commande (S212) des communications sans fil véhiculaires de l'unité de communications sans fil embarquée (400) selon une politique de communications sans fil définissant laquelle d'une pluralité de types différents de données de communications sans fil véhiculaires est autorisée dans la zone géographique, une fois qu'il s'avère que le véhicule se trouve dans la zone géographique, dans laquelle la pluralité de différents types de données est classée en fonction de la durée au cours de laquelle une transmission peut être retardée, et comprend un premier type de données autorisées à être transmises dans la zone géographique à tout moment, un second type de données ne pouvant être autorisées à être transmises dans la zone géographique qu'une fois qu'il n'y a pas de restrictions sur les communications sans fil véhiculaires dans la zone géographique, et un troisième type de données dont au moins une partie ne peut être transmise dans la zone géographique qu'après expiration d'un délai prédéterminé.

12. Une unité de communications sans fil embarquées (400) pour un véhicule (102), comprenant :
des circuits de communications sans fil (406);
un processeur (402); et
une mémoire (404) stockant des instructions qui, une fois exécutées par le processeur (402), sont adaptées à: la surveillance d'un emplacement du véhicule (102), la détermination du fait que le véhicule (102) se trouve dans la zone géographique au regard de l'emplacement surveillé, et la commande des communications sans fil de l'unité de communications sans fil embarquées (400) selon une politique de communication sans fil définissant laquelle d'une pluralité de types différents de données de communications sans fil véhiculaires est autorisée dans la zone géographique, une fois qu'il s'avère que le véhicule se trouve dans la zone géographique, dans laquelle la pluralité de différents types de données est classée selon la durée au cours de laquelle la transmission peut être retardée, et comprend un premier type de données autorisées à être transmises à tout moment dans la zone géographique, un second type de données qui ne sont autorisées à être transmises dans la zone géographique qu'une fois qu'il n'y a pas de restrictions au regard des communications sans fil véhiculaires dans la zone géographique, et un troisième type de données dont au moins une partie ne peut être transmise dans la zone géographique qu'après expiration d'un délai prédéterminé.

13. Un véhicule (102) comportant l'unité de communications sans fil embarquées (400) selon la revendication 12.
